# EUROPEAN PATENT SPECIFICATION

(11) **EP 3 222 883 B1**
(45) Date of publication and mention of the grant of the patent: **25.07.2018**
(21) Application number: 17161191.6
(22) Date of filing: 15.03.2017
(51) Int. Cl.: F16H 55/12

(54) **PINION FORMED BY TWO JOINABLE PARTS**
AUS ZWEI TEILEN MONTIERTES ZAHNRAD
ROUE DENTÉE MONTÉE DE DEUX PIECES

(30) Priority: 23.03.2016 IT UA20161929
(43) Date of publication of application: 27.09.2017
(73) Proprietor: System Plast S.r.l., 24060 Telgate (BG) (IT)
(72) Inventor: MULLER, Markus, 01454 Radeberg (DE); ZANI, Francesco, 25030 Torbiato di Adro (BS) (IT); VAN DER HOEVEN, Ted, 2678 TT De Lier (NL)
(74) Representative: Gatti, Enrico

(56) References cited:
- EP-A1- 0 757 191
- DE-U1-202008 000 417
- US-A- 5 378 203
- US-A1- 2010 160 097
- US-A1- 2014 305 241

## Description

The present invention relates to a pinion formed by two joinable parts mountable on a shaft and preferably toothed.

As known, pinions formed by two joinable parts are available. The pinions are formed in two parts in order to allow easier mounting and repair, as there is no need to remove the shaft on which they are mounted.

It is necessary for the connection between the two parts to be durable, so that high torque can be applied. In the pinions manufactured in two halves the combination of various stress creates friction forces in the junction thereof which is released on the fixing elements. An insufficient reaction at the outlying part of the wheel can create dimensional deformations under stress.

The profiles of the teeth are not always symmetrical, and therefore it is necessary to not reverse the two halves during the pinion assembly.

The two parts of the pinion are normally fixed one to the other by means of two screws and two nuts.

These bolts are perfectly able to keep the two halves together, but due to the clearance between screw and hole, they cannot absorb the friction forces.

Furthermore, since they are symmetrically arranged, it is possible that the buyer could make an error during the assembly of the pinion.

Another disadvantage of using screws and nuts is the fact that the pinion has two holes for the screws and two holes for the nuts. This is unfavourable from a sanitary point of view, since dirt may clog the holes.

If all the holes are clogged with dirt the head of the screw which allows to remove the pinion, cannot be seen.

Moreover, the holes degrade the profile of the teeth of the pinion.

There is also the risk that the bolt rotates within the hole. If this happens before the installation, the pinion must be thrown away. If it happens after the installation, the pinion must be destroyed in order to be removed from the shaft.

In addition to the bolts small pins are used to ensure that the two halves of the pinion are correctly aligned. DE 20 2008 00 417 U1 shows a pinion according to the preamble of claim 1.

The object of the present invention is to provide a pinion formed by two joinable parts which overcomes the drawbacks of the known art.

Another object is to provide a pinion which has a greater degree of absorption of the forces of friction between the two halves.

A further object is to provide an easily installable pinion.

Another object is to provide a pinion which eliminates assembly errors.

A further object is to provide to a pinion which is simple to implement.

According to the present invention, said objects and others are achieved by a pinion formed by two joinable parts which is mountable on a shaft comprising: a substantially semi-circular first portion of said pinion; a substantially semi-circular second portion of said pinion; said first portion has a first joining surface and a first portion of a hole concentric with said pinion; said second portion has a second joining surface and a second portion of a hole concentric with said pinion; said first joining surface is suited to be joined to said second joining surface by means of connection means; characterized in that said connection means comprise a first bushing and a second bushing; said first bushing is fixed on said first portion and protrudes from said first joining surface; said second bushing is fixed on said first or second portion and protrudes from said first or second joining surface.

Additional features of the invention are described in the dependent claims.

The advantages of this solution compared to known solutions are several.

With the present solution the holes for the nuts are no longer needed, but only those of the screws.

As fewer holes are provided (two instead of the four of the prior art) the profiles of the teeth of the pinion are less degraded.

The sanitary aspect is improved.

The screws are easily identified, and no time is lost during the disassembly step.

In case the bushing rotates within the pinion, the latter can always be removed without destroying it and without disassembling the shaft, because the bushing can be unscrewed.

The larger size of the bushings with respect to the pins used in the prior art allows a greater resistance to deformation under stress.

The pins no longer need to be inserted, which are usually inserted by hand with a hammer, making the working environment safer.

The characteristics and advantages of the present invention will become apparent from the following detailed description of an embodiment thereof, illustrated by way of non-limiting example in the accompanying drawings, wherein:

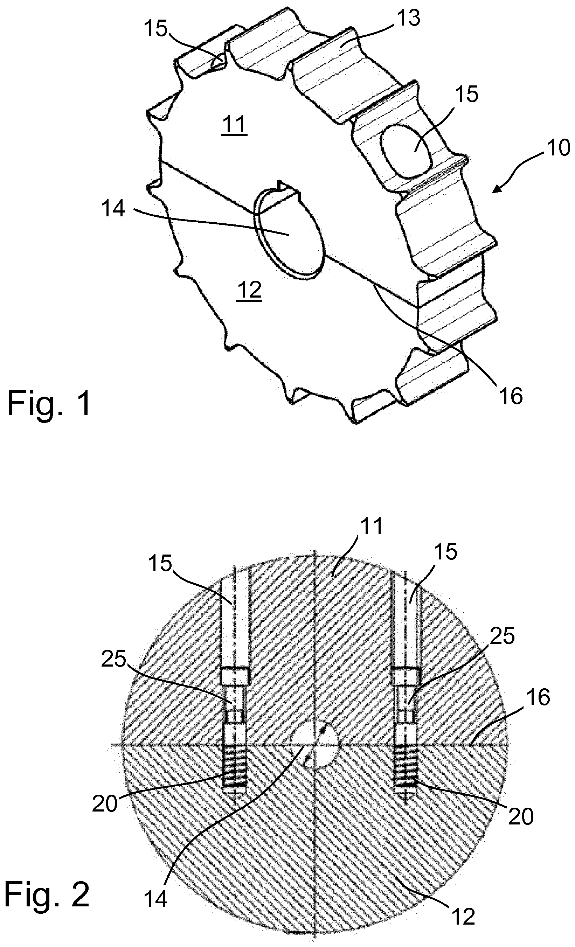

Figure 1 shows a pinion, seen in perspective, according to the present invention;
Figure 2 shows a pinion, seen partially and in cross section, according to the present invention;

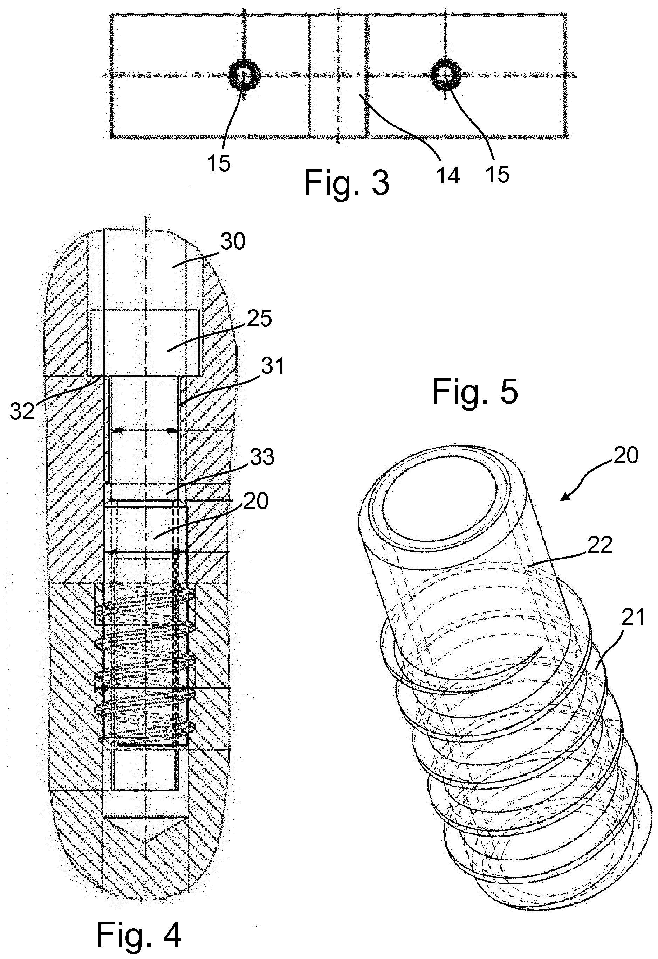

Figure 3 shows a pinion, seen in a side section, according to the present invention;
Figure 4 shows a fixing detail of a pinion, seen in a side section, according to the present invention;
Figure 5 shows a bushing for fixing a pinion, according the present invention.

Referring to the attached figures, a pinion 10, according to the present invention, comprises a first semi-circular portion 11 and a second semi-circular portion 12, joined together to form the pinion 10.

The pinion 10 preferably comprises a series of teeth 13 arranged on the external periphery of the same, and a central hole 14 coaxial (concentric) with the pinion 10.

The portion 11 comprises two holes 15 transverse to the axis of the pinion 10, arranged laterally to the hole 14, which, starting from the periphery of the pinion 10, preferably between a tooth 13 and another, reach the joining surfaces 16 of the two portions 11 and 12.

In the portion 12 two bushings 20 are screwed at the side of the hole 14, arranged so that they can be aligned with the corresponding holes 15. The portion 12 is previously prepared to receive the bushing 20.

The two pairs of holes 15 and the corresponding bushings 20 are arranged at the sides of the central hole 14 and approximately at half the distance between the central hole 14 and the outer edge of the pinion 10.

The two pairs of holes 15 and the corresponding bushings 20 are not, however, arranged at the same distance from the central hole 14 but at two different distances, so that the connection is made only in one way and it is not possible to incorrectly couple the two portions 11 and 12.

The bushings 20 have a threaded lower portion 21 and an upper smooth portion 22 on the outside.

The threaded portion 21 is fully screwed into the portion 12, whereas the smooth portion 22 is external to the portion 12, and therefore partially enters into the hole 15.

The bushings 20 are internally hollow and have on the inside a thread suited to receive a screw 25.

The holes 15 have an inner diameter that varies.

Starting from the periphery of the pinion 10 they have a diameter 30, for about half the depth, equal to that of the head of the screw 25, therefore a narrowing in the diameter 31 is provided, equal to that of the screw 25 and so as to form an undercut 32 to lock the head of the screw 25. A further increase in the diameter 33 is provided, which must be equal to the outer diameter of the smooth portion 22 of the bushing 20.

The pinion 10 is normally made of polyamide.

The bushing 20 is made of brass and is typically 40 mm long and has a diameter of 10 mm or 8 mm.

The bushing 20 is substantially cylindrical and the thread 21, is 20 mm long, and protrudes from the cylindrical body by 1.5 mm.

The thread is suitable to be used in plastic materials, of the flat crested type, and the step has a ratio with the width at the base of the thread comprised between 3 to 1 and 4 to 1.

The screws 25 are normally M6 or M8.

In an alternative embodiment, the bushings 20 can be inserted in a first portion 11 and in a second portion 12. The holes 15 therefore will be one in the first portion 11 and one in the second portion 12.

The materials used, as well as the dimensions, of the pinions and of the bushings, may however be any according to the requirements and the state of the art.

## Claims

1. A pinion (10) formed by two joinable parts (11, 12) which is mountable on a shaft, comprising: a substantially semi-circular first portion (12) of said pinion (10); a substantially semi-circular second portion (11) of said pinion (10); said first portion (12) has a first joining surface (16) and a first portion (14) of a hole concentric with said pinion (10); said second portion (11) has a second joining surface (16) and a second portion (14) of a hole concentric with said pinion (10); said first joining surface (16) is suited to be joined to said second joining surface (16) by means of connection means (20, 25); **characterized in that** said connection means (20, 25) comprise a first bushing (20) and a second bushing (20); said first bushing (20) is fixed onto said first portion (12) and protrudes from said first joining surface (16); said second bushing (20) is fixed onto said first (12) or second (11) portion and protrudes from said first or second joining surface (16).

2. The pinion (10) according to claim 1 **characterized in that** said first portion (12) and said second portion (11) is half pinion and said first and second concentric hole portion is half hole (14).

3. The pinion (10) according to one of the preceding claims, **characterized in that** said first bushing (20) and said second bushing (20) are partially covered by an external thread (21).

4. The pinion (10) according to one of the preceding claims, **characterized in that** said first bushing (20) and said second bushing (20) are partially smooth on the outer portion (22).

5. The pinion (10) according to one of the preceding claims, **characterized in that** said first bushing (20) is screwed into said first portion (12) and said second bushing (20) is screwed into said first (12) or second (11) portion.

6. The pinion (10) according to one of the preceding claims, **characterized in that** said first bushing (20) and said second bushing (20) are hollow and internally threaded.

7. The pinion (10) according to one of the preceding claims, **characterized in that** said first and said second bushing (20) are substantially cylindrical and comprise a flat crested thread (21) on the outside.

8. The pinion (10) according to one of the preceding claims, **characterized in that** a first hole (15) is arranged on said second portion (11) and is aligned with said first bushing (20); a second hole (15) is arranged on said second portion (11) and is aligned with said second bushing (20).

9. The pinion (10) according to one of the preceding claims, **characterized in that** said first bushing (20) and said second bushing (20) are arranged at the sides of said first concentric hole portion (14).

10. The pinion (10) according to one of the preceding claims, **characterized in that** said first bushing (20) is fixed onto said first portion (12) at a distance from said first concentric hole portion (14) different from the distance between said second bushing (20) and said first concentric hole portion (14).

11. The pinion (10) according to claim 3, **characterized in that** the thread (21) of said first bushing (20) and of said second bushing (20) has a step that has a ratio with the width at the base of the thread (21) comprised between 3 to 1 and 4 to 1.

## Patentansprüche

1. Ein Getrieberad (10), das aus zwei verbindbaren Teilen (11, 12) gebildet wird und an eine Welle montiert werden kann, und das Folgendes umfasst: einen im Wesentlichen halbkreisförmigen ersten Abschnitt (12) des genannten Getrieberades (10); einen im Wesentlichen halbkreisförmigen zweiten Abschnitt (11) des genannten Getrieberades (10); wobei der genannte erste Abschnitt (12) jeweils eine erste Kupplungsfläche (16) und einen ersten Abschnitt (14) einer mit dem genannten Getrieberad (10) konzentrischen Öffnung aufweist; der genannte zweite Abschnitt (11) jeweils eine zweite Kupplungsfläche (16) und einen zweiten Abschnitt (14) einer mit dem genannten Getrieberad (10) konzentrischen Öffnung aufweist; die genannte erste Kupplungsfläche (16) geeignet ist, mit der genannten zweiten Kupplungsfläche (16) mit Hilfe entsprechender Verbindungselemente (20, 25) verbunden zu werden, **dadurch gekennzeichnet, dass** die genannten Verbindungselemente (20, 25) jeweils eine erste Buchse (20) und eine zweite Buchse (20) umfassen; wobei die genannte erste Buchse (20) auf dem genannten ersten Abschnitt (12) befestigt ist und von der genannten ersten Kupplungsfläche (16) vorsteht; und die genannte zweite Buchse (20) jeweils auf dem genannten ersten (12) oder zweiten (11) Abschnitt befestigt ist und von der genannten ersten oder zweiten Kupplungsfläche (16) vorsteht.

2. Das Getrieberad (10) gemäß Anspruch 1, **dadurch gekennzeichnet, dass** der genannte erste Abschnitt (12) und der genannte zweite Abschnitt (11) das halbe Getrieberad und der genannte erste und zweite konzentrische Öffnungsabschnitt die halbe Öffnung (14) ist.

3. Das Getrieberad (10) gemäß einem der vorausgegangenen Ansprüche, **dadurch gekennzeichnet, dass** die genannte erste Buchse (20) und die genannte zweite Buchse (20) teilweise durch ein äußeres Gewinde (21) bedeckt werden.

4. Das Getrieberad (10) gemäß einem der vorausgegangenen Ansprüche, **dadurch gekennzeichnet, dass** die genannte erste Buchse (20) und die genannte zweite Buchse (20) an dem äußeren Abschnitt (22) teilweise glatt sind.

5. Das Getrieberad (10) gemäß einem der vorausgegangenen Ansprüche, **dadurch gekennzeichnet, dass** die genannte erste Buchse (20) jeweils mit dem genannten ersten Abschnitt (12) verschraubt ist und die genannte zweite Buchse (20) jeweils mit dem genannten ersten (12) oder zweiten (11) Abschnitt verschraubt ist.

6. Das Getrieberad (10) gemäß einem der vorausgegangenen Ansprüche, **dadurch gekennzeichnet, dass** die genannte erste Buchse (20) und die genannte zweite Buchse (20) hohl sind und innen ein Gewinde aufweisen.

7. Das Getrieberad (10) gemäß einem der vorausgegangenen Ansprüche, **dadurch gekennzeichnet, dass** die genannte erste und zweite Buchse (20) im Wesentlichen zylindrisch sind und an der Außenseite jeweils eine flache Gewindespitze (21) aufweisen.

8. Das Getrieberad (10) gemäß einem der vorausgegangenen Ansprüche, **dadurch gekennzeichnet, dass** eine erste Öffnung (15) sich an dem genannten zweiten Abschnitt (11) befindet und jeweils mit der genannten ersten Buchse (20) ausgerichtet ist; und eine zweite Öffnung (15) sich an dem genannten zweiten Abschnitt (11) befindet und jeweils mit der genannten zweiten Buchse (20) ausgerichtet ist.

9. Das Getrieberad (10) gemäß einem der vorausgegangenen Ansprüche, **dadurch gekennzeichnet, dass** die genannte erste Buchse (20) und die genannte zweite Buchse (20) jeweils an den Seiten des genannten ersten konzentrischen Öffnungsabschnitts (14) angeordnet sind.

10. Das Getrieberad (10) gemäß einem der vorausgegangenen Ansprüche, **dadurch gekennzeichnet, dass** die genannte erste Buchse (20) an dem genannten ersten Abschnitt (12) befestigt ist, und zwar in einem Abstand von dem genannten ersten konzentrischen Öffnungsabschnitt (14), welcher sich von dem Abstand zwischen der genannten zweiten Buchse (20) und dem genannten ersten konzentrischen Öffnungsabschnitt (14) unterscheidet.

11. Das Getrieberad (10) gemäß Anspruch 3, **dadurch gekennzeichnet, dass** das Gewinde (21) der genannten ersten Buchse (20) und der genannten zweiten Buchse (20) jeweils einen Absatz aufweist, welcher ein Verhältnis zu der Breite an der Basis des Gewindes (21) hat, das jeweils zwischen 3 zu 1 und 4 zu 1 liegt.

## Revendications

1. Pignon (10) formé de deux éléments pouvant être assemblés (11, 12), qui peut être monté sur un arbre, comprenant : une première partie sensiblement semi-circulaire (12) dudit pignon (10) ; une deuxième partie sensiblement semi-circulaire (11) dudit pignon (10) ;
ladite première partie (12) a une première surface d'assemblage (16) et une première portion (14) d'un trou concentrique avec ledit pignon (10) ; ladite deuxième partie (11) a une deuxième surface d'assemblage (16) et une deuxième portion (14) d'un trou concentrique avec ledit pignon (10) ; ladite première surface d'assemblage (16) est adaptée pour être assemblée à ladite deuxième surface d'assemblage (16) au moyen de moyens de connexion (20, 25) ;
**caractérisé en ce que** lesdits moyens de connexion (20, 25) comprennent une première bague (20) et une deuxième bague (20) ; ladite première bague (20) est fixée sur ladite première partie (12) et fait saillie par rapport à ladite première surface d'assemblage (16) ; ladite deuxième bague (20) est fixée sur ladite première (12) ou deuxième (11) partie et fait saillie par rapport à ladite première ou deuxième surface d'assemblage (16).

2. Pignon (10) selon la revendication 1, **caractérisé en ce que** ladite première partie (12) et ladite deuxième partie (11) sont un demi-pignon et ladite première et ladite deuxième portion de trou concentrique sont un demi-trou (14).

3. Pignon (10) selon une des revendications précédentes, **caractérisé en ce que** ladite première bague (20) et ladite deuxième bague (20) sont partiellement recouvertes par un filetage externe (21).

4. Pignon (10) selon une des revendications précédentes, **caractérisé en ce que** ladite première bague (20) et ladite deuxième bague (20) sont partiellement lisses sur la partie extérieure (22).

5. Pignon (10) selon une des revendications précédentes, **caractérisé en ce que** ladite première bague (20) est vissée sur ladite première partie (12) et ladite deuxième bague (20) est vissée sur ladite première (12) ou deuxième (11) partie.

6. Pignon (10) selon une des revendications précédentes, **caractérisé en ce que** ladite première bague (20) et ladite deuxième bague (20) sont creuses et filées intérieurement.

7. Pignon (10) selon une des revendications précédentes, **caractérisé en ce que** ladite première et ladite deuxième bague (20) sont sensiblement cylindriques et comprennent un filetage à crête plate (21) sur l'extérieur.

8. Pignon (10) selon une des revendications précédentes, **caractérisé en ce qu'**un premier trou (15) est agencé sur ladite deuxième partie (11) et est aligné avec ladite première bague (20) ; un deuxième trou (15) est agencé sur ladite deuxième partie (11) et est aligné avec ladite deuxième bague (20).

9. Pignon (10) selon une des revendications précédentes, **caractérisé en ce que** ladite première bague (20) et ladite deuxième bague (20) sont agencées sur les côtés de ladite première portion de trou concentrique (14).

10. Pignon (10) selon une des revendications précédentes, **caractérisé en ce que** ladite première bague (20) est fixée sur ladite première partie (12) à une distance de ladite première portion de trou concentrique (14) différente de la distance entre ladite deuxième bague (20) et ladite première portion de trou concentrique (14).

11. Pignon (10) selon la revendication 3, **caractérisé en ce que** le filetage (21) de ladite première bague (20) et de ladite deuxième bague (20) a un pas qui a un rapport avec la largeur à la base du filetage (21) compris entre 3 à 1 et 4 à 1.
